# EUROPÄISCHE PATENTSCHRIFT

(11) **EP 1 962 057 B1**
(45) Veröffentlichungstag und Bekanntmachung des Hinweises auf die Patenterteilung: **27.03.2013**
(21) Anmeldenummer: 08002397.1
(22) Anmeldetag: 08.02.2008
(51) Int. Cl.: G01C 21/00

(54) **Verfahren zur Ermittlung einer hochgenauen Position von Fahrwegen**
Method for determining the high-precision position of drive paths
Procédé de détermination d'une position très précise de trajectoires

(30) Priorität: 26.02.2007 DE 102007009639
(43) Veröffentlichungstag der Anmeldung: 27.08.2008
(73) Patentinhaber: Deutsches Zentrum für Luft- und Raumfahrt e.V., 51147 Köln (DE)
(72) Erfinder: Noyer, Ulf, 38110 Braunschweig (DE); Niehoff, Nico, 38173 Sickte (DE)
(74) Vertreter: Gerstein, Hans Joachim

(56) Entgegenhaltungen:
- US-A- 5 214 757
- US-A- 5 986 575
- US-A1- 2006 030 332
- US-B1- 6 236 938

## Beschreibung

Die Erfindung betrifft ein Verfahren zur Ermittlung einer hochgenauen Position von Fahrwegen, bei dem die zu erfassenden Fahrwege zunächst vermessen werden.

Zum Erstellen von digitalen Karten ist es notwendig, dass die in der Karte enthaltenen Fahrwege, wie zum Beispiel Straßen oder Schienen, und eventuell auch vorhandene Objekte, wie zum Beispiel Landmarken, Brücken oder bekannte Gebäude, zunächst vermessen werden, um deren Position zu bestimmen. Anhand dieser Position wird der entsprechende Fahrweg oder das entsprechende Objekt in die Karte eingetragen.

Das Vermessen von Fahrwegen erfolgt dabei meist mit Hilfe von entsprechend umgebauten Fahrzeugen, die einen zu vermessenden Fahrweg abfahren und dabei kontinuierlich mit Hilfe von Ortungssystemen, insbesondere Satellitenortungssystemen, die Position bestimmen. Dies ist zum Beispiel aus dem "StreetMapper" Projekt (www.streetmapper.net) oder dem "ViewCar" Projekt (www.dlr.de/fs/en/desktopdefault.aspx/tabid-1236/1690_read-3256) bekannt. Die einzelnen ermittelten Ortungspunkte werden dann zu einer Linie zusammengefasst, die dann später als ein entsprechender Fahrweg in die Karte eingetragen wird. Dabei kann für jeden Punkt auf der Linie die Position bestimmt werden, die die entsprechende Position des Fahrweges an dieser Stelle repräsentiert.

Bei der Vermessung von entsprechend realen Objekten, die in die digitale Karte eingetragen werden sollen, wird ähnlich verfahren. Ein mit 3D-Laserscannern ausgestattetes Fahrzeug fährt die Strecke ab, an denen sich die zu erfassenden Objekte befinden. Dabei werden während der Fahrt mittels des Laserscanners die zu erfassenden Objekte gescannt, so dass eine 3D-Darstellung der an der Strecke befindlichen Objekte erstellt werden kann.

Ein weiterer Anwendungsbereich für solche Techniken ist das Erstellen von so genannte digitalen Schienenkarten, bei denen eine bestimmte Schienenstrecke zunächst vermessen werden muss, um die Position der Gleisanlage feststellen zu können. Solche digitalen Schienenkarten werden zum Beispiel bei der Bauplanung verwendet. Dabei wird bei der Vermessung der Schienenstrecke meist ein "virtueller" Weg parallel zur eigentlichen Schiene vermessen, um den Schienenverkehr nicht zu behindern. Diese Vorgehensweise hat allerdings den Nachteil, dass die Messwerte meist sehr ungenau sind, was letztlich zu Ungenauigkeiten in der digitalen Schienenkarte führt.

Weiterhin nachteilig bei der oben genannten Vorgehensweise ist, dass die Fahrwege meist für andere Verkehrteilnehmer gesperrt werden müssen, damit die Vermessung durchgeführt werden kann. Zudem ist die Genauigkeit der ermittelten Position von der Genauigkeit des Ortungssystems abhängig, so dass eine Erhöhung der Genauigkeit meist nicht möglich ist. Dies führt letztlich dazu, dass die auf diese Art und Weise erstellten digitalen Karten nicht für Anwendungen geeignet sind, bei denen es auf eine exakte und hochgenaue Positionsangabe ankommt.

Die US 6,236,938 B1 offenbart ein Verfahren zum Berechnen und Abspeichern von Positionen eines Objektes, bei dem an einer ersten Position eines Messfahrzeuges eine GPS-Position ermittelt wird und an einer davon verschiedenen zweiten Position des Messfahrzeuges jedenfalls eine GPS-Position des Messfahrzeuges ermittelt wird, wobei an der zweiten Position mit Hilfe eines Entfernungsmessers die Entfernung von der zweiten Position zu dem zu vermessenden Objekt ermittelt wird. Daraufhin wird das Azimut zu dem Objekt in Abhängigkeit der ersten und der zweiten Position bestimmt, so dass sich die GPS-Position des Objektes anhand bekannter Verfahren ermitteln lässt.

In der US 5,214,757 wird ein automatisches Verfahren zum Vermessen von Straßen offenbart, bei dem die zu vermessende Straße abgefahren und jeweils kontinuierlich eine GPS-Position ermittelt wird. Aus dem kontinuierlich ermittelten GPS-Positionen ergibt sich dann eine Punktlinie, die die Position der Straße repräsentiert.

Aus der US 5,986,575 ist ein System für Rettungsfahrzeuge bekannt, mit dem die Lichtanlagen innerorts so manipuliert werden können, dass Rettungskräfte im Einsatz möglichst schnell und sicher zur Gefahrenstelle gelangen, ohne dabei den Verkehr unnötig zu belasten. Dazu wird von dem Rettungsfahrzeug kontinuierlich die GPS-Position ermittelt und an eine Zentrale weitergeleitet, die daraufhin die Ampelsteuerung vornimmt. Um eine möglichst hochgenaue Position ermitteln zu können, werden mehrere GPS-Positionen gemittelt.

Des Weiteren ist aus der US 2006/0030332 A1 ein System und ein Verfahren bekannt, mit dem die Position eines mobilen und kabellosen Senders im Gelände ermittelt werden kann. Dazu wird vorgeschlagen, dass die Position des Senders mehrfach ermittelt wird, wobei sich die exakte Position aus der statistischen Beziehung dieser Position ergibt.

Im Hinblick darauf ist es Aufgabe der Erfindung, ein Verfahren zur Ermittlung einer hochpräzisen Position von Fahrwegen für die Erstellung von digitalen Karten anzugeben.

Die Aufgabe wird mit dem im Anspruch 1 definierten Verfahren gelöst.

Die Lehre der vorliegenden Erfindung sieht demnach vor, dass die Fahrwege, deren Position exakt bestimmt werden soll, zunächst mehrfach vermessen werden. Das heißt, dass zum Beispiel bei einer zu vermessenden Straße diese mehrfach abgefahren und vermessen werden muss. Aus diesen Mehrfachvermessungen resultieren dann entsprechend viele Messwertreihen pro Fahrweg. Anhand dieser Vielzahl von durch die verschiedenen Vermessungen ermittelten Messwerten wird dann die exakte Position des Fahrweges mit Hilfe statistischer Verfahren bestimmt. D.h. die Messreihen werden mittels statistischer Verfahren zu einer sehr genauen Lösung zusammengeführt.

Die aus den mehrfachen Vermessungen stammenden Messwerte werden dann überlagert, wobei die Position des entsprechenden Fahrweges bzw. des entsprechenden Objektes anhand der überlagerten Messwerte ermittelt wird. Bei der Positionsbestimmung von Fahrwegen werden in die überlagerten Messwerte mehrere Ebenen gelegt, wobei die in der Nähe einer Ebene befindlichen Messwerte auf diese Ebene projiziert werden. Auf dieser Ebene, die vorteilhafterweise senkrecht zu dem Verlauf des Fahrweges gelegt wird, werden dann die auf die Ebenen projizierten Messwerte mit Hilfe eines statistischen Verfahrens gemittelt. Als statistisches Verfahren könnte zum Beispiel die Mittelwertbildung verwendet werden. Nach der Mittlung der Messwerte auf der Ebene existiert für jede Ebene genau ein gemittelter Messwert, mit Hilfe dessen dann die exakte Position des Fahrweges an dieser Stelle bestimmt wird. Auf diese Art und Weise werden dann die entsprechenden ortungsbedingten Messfehler in der Summe minimiert bzw. eliminiert.

Die in den Messwerten enthaltenen Messfehler werden somit mit Hilfe von statistischen Verfahren minimiert. Dieser vorteilhaften Ausgestaltung liegt dabei die Idee zugrunde, dass sich bei einer hinreichend großen Anzahl von Messwerten die Summe der Messfehler aufhebt. Dadurch wird es möglich, die Position der zu erfassenden Fahrwege oder Objekte derart exakt zu bestimmen, dass sie zur Erstellung von hochpräzisen digitalen Karten geeignet sind. Diese hochpräzisen digitalen Karten können dann für die Bauplanung oder ähnliches verwendet werden.

Um zum Beispiel nicht ortungsbedingte Messfehler zu eliminieren, die in der Regel stärker abweichen als die ortungsbedingten Messfehler, ist es sinnvoll, die Messwerte entsprechend zu filtern. Dies kann zum Beispiel dadurch geschehen, dass in den Messwerten nach Sprüngen oder stark abweichenden Messwerten gesucht wird. So können zum Beispiel Phantomobjekte ermittelt werden, die bei einer vorangegangenen Vermessung als Messwerte auftauchten, in einer späteren Vermessung jedoch verschwunden sind. Denn solche Phantomobjekte, aber auch große Sprünge oder stark abweichende Messwerte, führen letztlich dazu, dass der Fehler in der Summe aller Messwerte nicht mehr ausgeglichen werden kann, so dass die Positionsbestimmung nicht mehr hinreichend genau ist.

Weiterhin ist es vorteilhaft, wenn während der Vermessungen zusätzlich zu der jeweiligen Positionsangabe des Fahrweges auch eine Spurinformation mit ermittelt wird, die mit mindestens einem Messwert bzw. einer Positionsangabe korreliert. Dadurch wird es u. a. möglich, zu jeder Positionsangabe eines mehrspurigen Fahrweges die Fahrspur festzustellen, zu der die gemessene Positionsangabe gehört. Dies ist insbesondere deshalb vorteilhaft, da die Vermessung des Fahrweges nun nicht mehr nur auf eine Fahrspur des Fahrweges beschränkt ist. Denn die hochgenaue Position einer Fahrspur, und somit letztlich auch des Fahrweges, wird dann ausschließlich mit Hilfe der Messwerte ermittelt, die in der entsprechenden Fahrspur liegen. Messwerte, die auf anderen Fahrspuren aufgenommen wurden, werden dabei nicht berücksichtigt. Somit wird es möglich, dass während der Vermessung des Fahrweges die Fahrspur gewechselt werden kann, ohne das Ergebnis zu verfälschen. Auch lassen sich Ab- und Auffahrten von z. B. Autobahnen zuverlässig erkennen.

Ganz besonders vorteilhaft ist es, wenn aus den Spurinformationen die relative Position der zu den Spurinformationen korrelierenden Messwerte ermittelt werden kann. Diese relative Position kann z. B. die Lage innerhalb der Fahrspur oder des Fahrweges angeben. Es ist aber z. B. auch denkbar, dass die relative Position angibt, wie weit der Messwert bzw. Messpunkt von der rechten Fahrbahnbegrenzung oder Fahrspurbegrenzung abweicht. Aus dieser Information kann dann der zu der Spurinformation gehörende Messwert um die relative Position korrigiert werden, so dass die Messwerte z. B. auf die rechte Fahrbahnbegrenzung projiziert werden. Die hochgenaue Position der Fahrspur bzw. des Fahrweges wird erst dann aus den so korrigierten Messwerten mit Hilfe des oben genannten Verfahrens ermittelt.

Durch die Korrektur der Messwerte wird es somit möglich, dass bei der Vermessung des Fahrweges keine exakte virtuelle Linie mehr abgefahren werden muss, was in der Praxis häufig nur schwerlich möglich ist. Vielmehr wird mit Hilfe einer Sensordatenfusion eine hochgenaue digitale Karte erstellt.

Aus den so ermittelten hochgenauen Positionen mindestens zweier sich schneidender oder tangierender Fahrwege lässt sich dann die Position eine Topologie ermitteln. Bei sich schneiden oder tangieren der Fahrwege kann abgeleitet werden, dass sich die Fahrwege in einem bestimmten Bereich treffen oder annähern, wodurch z.B. eine Kreuzung als Topologie erkannt werden kann. Die Position einer solchen Topologie kann dann vorteilhafterweise in Abhängigkeit der Schnitt- oder Tangentialposition der sich schneidenden oder tangierenden Fahrwege ermittelt werden. Dabei wird unter einer Topologie im weitesten Sinne eine Anordnungen verstanden, an denen sich Fahrwege kreuzen bzw. schneiden oder tangieren. Im Straßenverkehr könnten dies zum Beispiel Kreuzungen, wie zum Beispiel eine T-Kreuzung, sein, aber auch Auf- und Abfahrten von Autobahnen. Auch Weichen im Schienenverkehr sind Topologien in diesem Sinne. Unter Topologien können somit all jene Anordnungen subsummiert werden, bei denen der lineare Straßenverlauf unterbrochen wird.

Dabei ist es besonders vorteilhaft, wenn die Position der jeweiligen Topologie in Abhängigkeit von Knoten ermittelt wird, wobei jeder Knoten einer Position der beteiligten Fahrwege zugeordnet wird und die Positionen der Knoten in einer Umgebung angeordnet sind, die die Stelle des Schneidens bzw. des Tangierens der Fahrwege beschreibt. Vorteilhafterweise weisen die Positionen der Knoten der jeweiligen Fahrwege die gleiche Position auf, so dass allein aus der Position der Knoten auf Position der Topologie geschlossen werden kann. Dies könnte z.B. dann der Fall sein, wenn für alle beteiligten Fahrwege die Ebenen, auf die die jeweiligen Messpunkte projiziert werden, gleich oder im gleichen Abstand angeordnet sind. Ein solcher Knoten bzw. Knotenpunkt stellt dabei eine hochgenaue Position innerhalb eines Fahrweges dar, wobei die Menge aller Knotenpunkte eines Fahrweges die Position des Fahrweges darstellen.

Lassen sich keine Knoten der jeweiligen Fahrwege mit der exakt gleichen Position ermitteln, so ist es besonders vorteilhaft, die Position der Topologie in Abhängigkeit von der Position der Knoten der jeweiligen Fahrwege innerhalb einer bestimmten Umgebung zu ermitteln, wobei die Umgebung einen Bereich definiert, indem sich die Fahrwege schneiden oder tangieren. Somit ist es nicht zwingend erforderlich, dass die Knotenpositionen der jeweiligen Fahrwege in dem Schnittbereich exakt gleich sind, um die Position der entsprechenden Topologie ermitteln zu können. Vielmehr reicht es aus, dass die Knoten innerhalb einer bestimmten Umgebung angeordnet sind, um auf die Position der Topologie zu schließen.

Weiterhin ist besonders vorteilhaft, wenn in Abhängigkeit mindestens einer Eigenschaft der sich schneidenden oder tangierenden Fahrwege eine Eigenschaft der Topologie ermittelt wird. Eine Eigenschaft eines Fahrweges kann zum Beispiel die Verkehrsart, wie zum Beispiel Straße oder Schiene, aber auch die Art der Verkehrsführung, wie zum Beispiel Ein- oder Zweirichtungsfahrbahn, darstellen. In Abhängigkeit dieser Eigenschaften der sich schneidenden oder tangierenden Fahrwege können dann Eigenschaften der Topologie, wie zum Beispiel, ob es sich bei der Topologie um eine Kreuzung oder um eine Weiche handelt, ermittelt werden. Darüber hinaus ist es besonders vorteilhaft, wenn in Abhängigkeit dieser Eigenschaften der Fahrwege bzw. der Topologie eine Vernetzungsbeziehung der sich schneidenden oder tangierenden Fahrwege ermittelt wird. So können zum Beispiel Verkehrsfluss bzw. Verkehrsrichtungsbeziehungen von einem Fahrweg auf den nächsten Fahrweg in Abhängigkeit dieser Eigenschaften bestimmt werden.

Die Erfindung wird anhand der beigefügten Figuren beispielhaft näher erläutert. Es zeigen:
- Figur 1a, 1b, 1c:: Schematische Darstellung der Überlagerung der Messwerte, Projizieren der Messwerte auf die entsprechenden Ebenen und Ermitteln einer exakten Position des Fahrweges;
- Figur 2:: Schematische Darstellung einer Fahrspurvermessung mit Spurerkennungssystem.
- Figur 3a, 3b:: Schematische Darstellung sich schneidender und tangierender Fahrwege

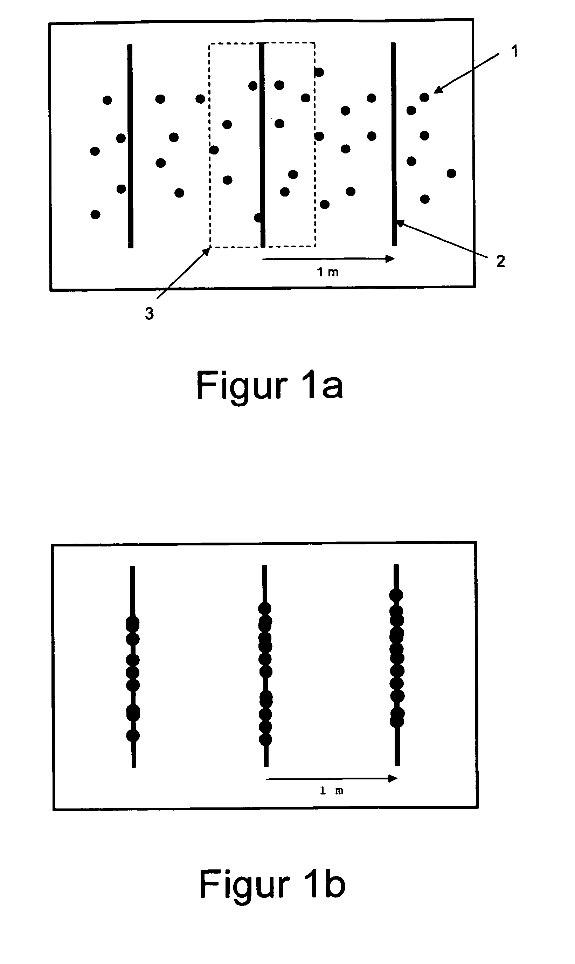

Figur 1a zeigt schematisch eine Mehrzahl von Messwerten 1, die bei der Vermessung eines Fahrweges ermittelt wurden. Dabei wurden mehrere Vermessungen durchgeführt und die bei den einzelnen Vermessungen aufgenommenen Messwerte wurden dann, wie in Figur 1a dargestellt, überlagert. In diese so überlagerten Messwerte wurden dann entsprechende Ebenen 2 gelegt, die senkrecht zu dem Verlauf des Fahrweges definiert werden. Diese Ebenen 2 können zum Beispiel in einem Abstand von einem Meter in die Messwertreihen gelegt werden, wie in dem Ausführungsbeispiel der Figur 1a dargestellt ist.

Jede dieser Ebenen 2 bildet um sich herum einen Bereich 3. Die in diesem Bereich 3 liegenden Messwerte werden dann, wie in Figur 1b gezeigt, auf die entsprechende Ebene projiziert. In diesem Ausführungsbeispiel bedeutet dies, dass die Messwerte horizontal in der Fahrwegrichtung auf die entsprechenden Ebenen verschoben werden. Nach diesem Schritt ergibt sich dann eine Bündelung der Messwerte auf den einzelnen Ebenen.

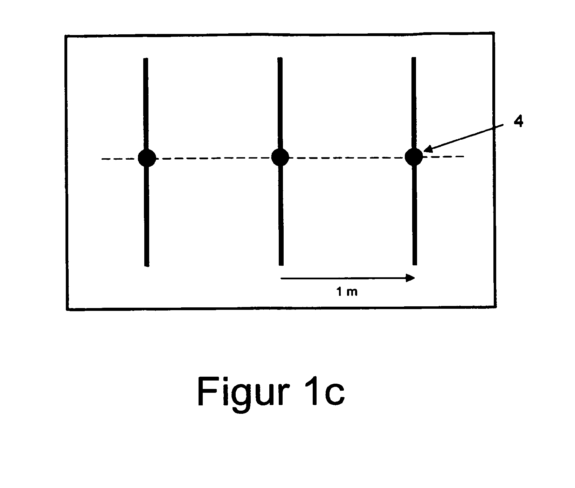

Aufgrund der ortungsbedingten Ungenauigkeit weichen diese Messwerte nun in der Ebene 2 von der tatsächlichen Position an dieser Stelle des Fahrweges ab. Um die tatsächliche Position des Fahrweges an dieser Stelle annähernd exakt bestimmen zu können, werden die auf die Ebene 2 projizierten Messwerte unter Verwendung eines statistischen Verfahrens gemittelt. Ein solches statistisches Verfahren könnte zum Beispiel die Mittelwertbildung sein. Dies wird für jede Ebene 2 durchgeführt. Das Ergebnis ist dann, wie Figur 1c zeigt, ein einzelner gemittelter Messwert 4 für jede Ebene 2, aus denen dann die annähernd exakte Position des Fahrweges bestimmt werden kann.

Diesem Verfahren liegt die Idee zugrunde, dass die Mittelung der Messwerte nur anhand von solchen Messwerten erfolgt, deren horizontale Positionsinformation, d.h. die Positionsinformation in Richtung Fahrweg, eliminiert wurde.

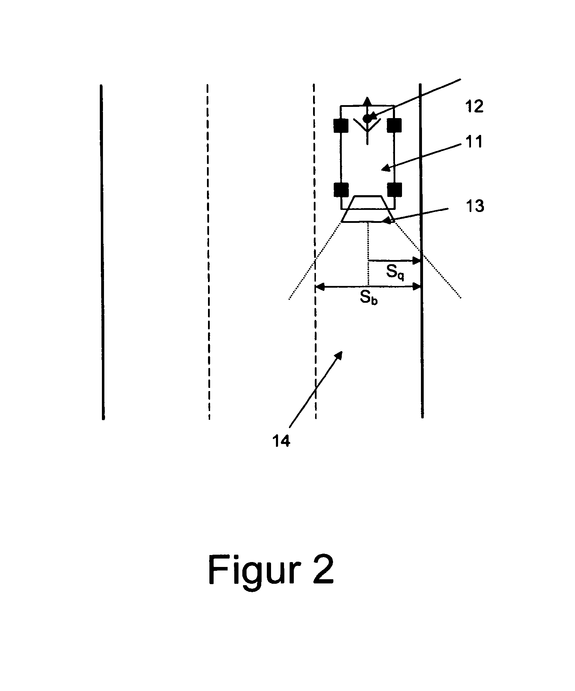

Figur 2 zeigt eine schematische Darstellung einer Fahrspurvermessung mittels eines speziellen Fahrzeuges 11. Das Fahrzeug 11 ist dabei mit einem Satellitenortungssystem 12, z. B. einem GPS Empfänger, und einem Spurerkennungssystem 13 ausgerüstet, wobei die Fahrspur 14 vermessen werden soll. Das Spurerkennungssystem 13 ist in diesem Ausführungsbeispiel als eine Kamera ausgestaltet, die den Fahrweg bzw. die Fahrspur 14 aufnimmt. An Hand der aufgezeichneten Bildinformation ist das System in der Lage, sowohl die Breite Sb der Fahrspur, als auch die Querablage Sq, d.h. die Entfernung vom Mittelpunkt des Fahrzeuges zur rechten Fahrbahnbegrenzung, zu ermitteln.

Die von dem Satellitenortungssystem 12 ermittelten Positionswerte werden jeweils mit der aktuellen Spurinformation (Fahrspurbreite und/oder Querablage) zusammen abgelegt. Daraus lässt sich dann ermitteln, um welchen Wert die gemessene Position von der z. B. rechten Fahrbahnbegrenzung abweicht. Die Positionen können dann um diesen Wert korrigiert werden.

Denkbar ist aber auch, dass mit Hilfe des Spurerkennungssystem 13 die Fahrspur 14 erkannt wird, so dass für die Ermittlung der Position der Fahrspur nur die Messwerte verwendet werden, die auch in der entsprechenden Fahrspur gemessen wurden.

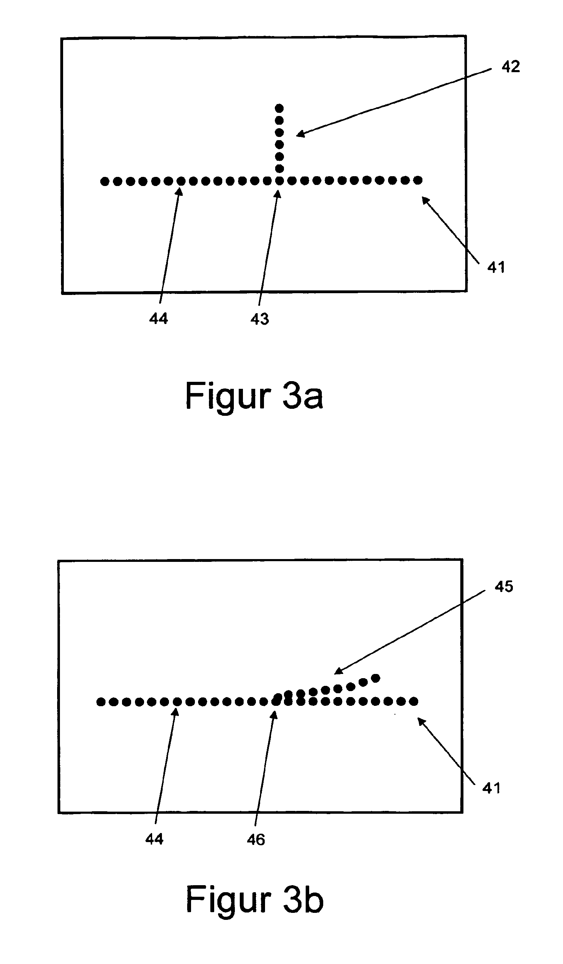

Figur 3a zeigt eine Darstellung zweier sich schneidender Fahrwege 41 und 42. Zunächst wurde die hochgenaue Position der beiden Fahrwege 41 und 42 mit Hilfe des o.g. Verfahrens bestimmt, so dass die Position jedes Fahrweges aus einer Menge von Knotenpositionen bestimmt wird. Beide Fahrwege 41 und 42 treffen in dem Bereich 43 derart aufeinander, dass an dieser Stelle eine T-Kreuzung entsteht. In dem Bereich 43 existieren zwei Knoten, wobei der eine Knoten zu dem Fahrweg 41 und der andere Knoten zu dem Fahrweg 42 gehört. In diesem Ausführungsbeispiel in Figur 4a haben beide Knoten im Bereich 43 dieselbe Position, so dass daraus exakt auf die Position der Topologie geschlossen werden kann.

Wäre an dieser Stelle zum Beispiel bekannt, dass der Fahrweg 42 in Richtung des Fahrweges 41 eine Einbahnstraße darstellt, so könnte daraus für die Topologie im Bereich 43 hergeleitet werden, dass von dem Fahrweg 41 aus ein Einfahren in den Fahrweg 42 unter Einhalten der bestehenden Verkehrsregeln nicht möglich ist. Ein Abbiegen von dem Fahrweg 41 in den Fahrweg 42 ist daher im Bereich der Topologie 43 nicht erlaubt.

Figur 3b zeigt schematisch eine ähnliche Darstellung wie Figur 3a, wobei ein Fahrweg 45 einen Fahrweg 41 tangiert. In diesem Ausführungsbeispiel ist zu erkennen, dass im Bereich 46 die beiden Knoten des jeweiligen Fahrweges 41 und 45 nicht exakt die gleiche Position aufweisen. Mit Hilfe einer geeignet gewählten Umgebung im Bereich 46 wäre jedoch erkennbar, dass die beiden Fahrwege 41 und 45 sich in diesem Bereich tangieren. Die Position der Topologie kann dann in Abhängigkeit der in dem tangierenden Bereich angeordneten Knoten ermittelt werden, z.B. durch Mittelwertbildung.

Ist zum Beispiel bekannt, dass es sich bei den beiden Fahrwegen 41 und 45 um Schienen handelt, so kann im Bereich 46 auf eine Weiche geschlossen und deren Position in Abhängigkeit des Bereiches 46 ermittelt werden. Es ist aber auch denkbar, dass zum Beispiel der Fahrweg 41 eine Autobahn und der Fahrweg 45 eine Abfahrt darstellt, so dass im Bereich 46 auf die Position bzw. den Beginn der Autobahnabfahrt geschlossen werden kann.

## Patentansprüche

1. Verfahren zur Ermittlung einer hochgenauen Position von Fahrwegen, bei dem die zu erfassenden Fahrwege zunächst mehrfach vermessen werden, **gekennzeichnet durch** die Schritte:
- Überlagern der aus den mehrfachen Vermessungen stammenden Messwerte;
- Projizieren der überlagerten Messwerte auf mehrere, senkrecht zu dem Verlauf des Fahrweges in die überlagerten Messwerte gelegten Ebenen, wobei die in der Nähe einer Ebene befindlichen Messwerte auf diese Ebene projiziert werden und wobei die auf die Ebenen projizierten Messwerte mittels statistischer Verfahren auf der jeweiligen Ebene gemittelt werden, und
- Ermitteln der Position des Fahrweges anhand der auf die jeweiligen Ebenen gemittelten Messwerte.

2. Verfahren nach Anspruch 1, **dadurch gekennzeichnet, dass** bei der Vermessung von Fahrwegen zusätzlich eine Spurinformation ermittelt wird, die mit mindestens einem Messwert korreliert und die hochgenaue Position einer Fahrspur eines mehrspurigen Fahrweges in Abhängigkeit der Messwerte ermittelt wird, die mit der aus den Spurinformationen ermittelbaren Fahrspur korrellert.

3. Verfahren nach Anspruch 2, **dadurch gekennzeichnet, dass** aus den Spurinformationen eine relative Position der mit den Spurinformation korrelierenden Messwerte innerhalb einer Fahrspur und/oder eines Fahrweges ermittefbar ist und die hochgenaue Position einer Fahrspur und/oder eines Fahrweges in Abhängigkeit der um die relative Position der jeweiligen Messwerte korrigierten Messwerte ermittelt wird.

4. Verfahren nach einem der vorhergehenden Ansprüche, **dadurch gekennzeichnet, dass** die Position einer Anordnung, an der sich Fahrwege schneiden oder tangieren, in Abhängigkeit der Schnitt- oder Tangentialposition sich schneidender oder tangierender Fahrwege ermittelt wird.

5. Verfahren nach Anspruch 4, **dadurch gekennzeichnet, dass** die Position der Anordnung, an der sich Fahrwege schneiden oder tangieren, in Abhängigkeit einer Mehrzahl von Knoten ermittelt wird, wobei jeder Knoten einer Position der sich schneidenden oder tangierenden Fahrwege zugeordnet wird und die Positionen der Knoten in einer Umgebung der schneidenden oder tangierenden Position angeordnet sind.

6. Verfahren nach Anspruch 5, **dadurch gekennzeichnet, dass** die Position der Anordnung, an der sich Fahrwege schneiden oder tangieren, in Abhängigkeit der Knoten ermittelt wird, die die gleiche Position aufweisen.

7. Verfahren nach einem der Ansprüche 4 bis 6, **dadurch gekennzeichnet, dass** mindestens eine Eigenschaft der Anordnung, an der sich Fahrwege schneiden oder tangieren, in Abhängigkeit mindestens einer Eigenschaft der sich schneidenden oder tangierenden Fahrwege ermittelt wird.

8. Verfahren nach Anspruch 7, **dadurch gekennzeichnet, dass** in Abhängigkeit mindestens einer Eigenschaft der Anordnung, an der sich Fahrwege schneiden oder tangieren, und/oder in Abhängigkeit mindestens einer Eigenschaft der sich schneidenden oder tangierenden Fahrwege eine Vernetzungsbeziehung der sich schneidenden oder tangierenden Fahrwege ermittelt wird.

9. Verfahren nach einem der vorhergehenden Ansprüche, **dadurch gekennzeichnet, dass** Messfehler in den durch die mehrfache Vermessung erhaltenen Messwerte mittels statistischer Verfahren minimiert werden.

10. Verfahren nach einem der vorhergehenden Ansprüche, **dadurch gekennzeichnet, dass** in Abhängigkeit der ermittelten hochgenauen Position eine digitale Karte erstellt wird.

11. Verfahren nach einem der vorhergehenden Ansprüche, **gekennzeichnet durch** Filtern der erhaltenen Messwerte insbesondere nach Sprüngen, stark abweichenden Messwerten und/oder Phantomobjekten.

## Claims

1. Method for determining a highly accurate position of routes, in which the routes to be recorded are first of all surveyed repeatedly, **characterized by** the steps of;
- superimposing the measured values originating from the repeated surveying operations;
- projecting the superimposed measured values onto a plurality of planes placed perpendicular to the course of the route in the superimposed measured values, the measured values in the vicinity of a plane being projected onto this plane and the measured values projected onto the planes being averaged on the respective plane using statistical methods, and
- determining the position of the route using the measured values averaged on the respective planes.

2. Method according to Claim 1, **characterized in that** an item of lane information which correlates with at least one measured value is additionally determined when surveying routes and the highly accurate position of a lane of a multilane route is determined on the basis of the measured values which correlate with the lane which can be determined from the lane information.

3. Method according to Claim 2, **characterized in that** the lane information can be used to determine a relative position of the measured values, which correlate with the lane information, inside a lane and/or a route and the highly accurate position of a lane and/or a route is determined on the basis of the measured values which have been corrected by the relative position of the respective measured values.

4. Method according to one of the preceding claims, **characterized in that** the position of an arrangement in which routes intersect or are at a tangent is determined on the basis of the position of intersection or tangential position of routes which intersect or are at a tangent.

5. Method according to Claim 4, **characterized in that** the position of the arrangement in which routes intersect or are at a tangent is determined on the basis of a plurality of nodes, each node being assigned to a position of the routes which intersect or are at a tangent and the positions of the nodes being arranged in an area surrounding the intersecting or tangential position.

6. Method according to Claim 5, **characterized in that** the position of the arrangement in which routes intersect or are at a tangent is determined on the basis of the nodes which have the same position.

7. Method according to one of Claims 4 to 6, **characterized in that** at least one property of the arrangement in which routes intersect or are at a tangent is determined on the basis of at least one property of the routes which intersect or are at a tangent.

8. Method according to Claim 7, **characterized in that** an interlinking relationship of the routes which intersect or are at a tangent is determined on the basis of at least one property of the arrangement in which routes intersect or are at a tangent, and/or on the basis of at least one property of the routes which intersect or are at a tangent.

9. Method according to one of the preceding claims, **characterized in that** measurement errors in the measured values obtained by the repeated surveying operation are minimized using statistical methods.

10. Method according to one of the preceding claims, **characterized in that** a digital map is created on the basis of the determined highly accurate position.

11. Method according to one of the preceding claims, **characterized by** filtering of the measured values obtained, in particular according to sudden changes, greatly differing measured values and/or phantom objects.

## Revendications

1. Procédé de détermination d'une position de très grande précision de voies de circulation, selon lequel les voies de circulation à détecter sont tout d'abord mesurées plusieurs fois, **caractérisé par** les étapes suivantes :
- superposition des valeurs mesurées issues des multiples mesures ;
- projection des valeurs mesurées superposées sur plusieurs plans placés perpendiculairement au tracé de la voie de circulation dans les valeurs mesurées superposées, les valeurs mesurées qui se trouvent à proximité d'un plan étant projetées sur ce plan et la moyenne des valeurs mesurées projetées sur les plans étant calculée sur le plan respectif au moyen d'un procédé statistique, et
- détermination de la position de la voie de circulation au moyen des moyennes des valeurs mesurées calculées sur les plans respectifs.

2. Procédé selon la revendication 1, **caractérisé en ce qu'**une information de bande est en plus déterminée lors de la mesure de voies de circulation, laquelle est en corrélation avec au moins une valeur mesurée et la position de très grande précision d'une bande de circulation d'une voie de circulation à plusieurs bandes est déterminée en fonction des valeurs mesurées qui sont en corrélation avec la bande de circulation qui peut être déterminée à partir des informations de bande.

3. Procédé selon la revendication 2, **caractérisé en ce qu'**à partir des informations de bande peut être déterminée une position relative des valeurs mesurées en corrélation avec l'information de bande à l'intérieur d'une bande de circulation et/ou d'une voie de circulation et la position de très grande précision d'une bande de circulation et/ou d'une voie de circulation est déterminée en fonction des valeurs mesurées corrigées de la position relative des valeurs mesurées respectives.

4. Procédé selon l'une des revendications précédentes, **caractérisé en ce que** la position d'un arrangement auquel les voies de circulation se croisent ou sont tangentes est déterminée en fonction de la position d'intersection ou tangentielle des voies de circulation qui se croisent ou qui sont tangentes.

5. Procédé selon la revendication 4, **caractérisé en ce que** la position de l'arrangement auquel les voies de circulation se croisent ou sont tangentes est déterminée en fonction d'une pluralité de noeuds, à chaque noeud étant associée une position des voies de circulation qui se croisent ou qui sont tangentes et les positions des noeuds étant disposées dans un environnement de la position d'intersection ou tangentielle.

6. Procédé selon la revendication 5, **caractérisé en ce que** la position de l'arrangement auquel les voies de circulation se croisent ou sont tangentes est déterminée en fonction des noeuds qui présentent la même position.

7. Procédé selon l'une des revendications 4 à 6, **caractérisé en ce qu'**au moins une propriété de l'arrangement auquel les voies de circulation se croisent ou sont tangentes est déterminée en fonction d'au moins une propriété des voies de circulation qui se croisent ou qui sont tangentes.

8. Procédé selon la revendication 7, **caractérisé en ce qu'**une relation de mise en réseau des voies de circulation qui se croisent ou qui sont tangentes est déterminée en fonction d'au moins une propriété de l'arrangement auquel les voies de circulation se croisent ou sont tangentes et/ou en fonction d'au moins une propriété des voies de circulation qui se croisent ou qui sont tangentes.

9. Procédé selon l'une des revendications précédentes, **caractérisé en ce que** les erreurs de mesure dans les valeurs mesurées obtenues par la mesure multiple sont minimisées au moyen de procédés statistiques.

10. Procédé selon l'une des revendications précédentes, **caractérisé en ce qu'**une carte numérique est établie en fonction de la position de très grande précision déterminée.

11. Procédé selon l'une des revendications précédentes, **caractérisé par** le filtrage des valeurs mesurées obtenues, notamment pour éliminer les sauts, les valeurs mesurées très différentes et/ou les objets fantômes.
